(19) Europäisches Patentamt / European Patent Office / Office européen des brevets

(11) EP 3 812 026 A1

(12) **EUROPEAN PATENT APPLICATION**
published in accordance with Art. 153(4) EPC

(43) Date of publication:
28.04.2021 Bulletin 2021/17

(21) Application number: 19810027.3

(22) Date of filing: 31.05.2019

(51) Int Cl.:
*B01D 39/16* (2006.01)     *B01D 46/52* (2006.01)
*B01D 69/02* (2006.01)     *B01D 69/10* (2006.01)
*B01D 69/12* (2006.01)     *B01D 71/26* (2006.01)
*B01D 71/36* (2006.01)     *B01D 71/48* (2006.01)

(86) International application number:
PCT/JP2019/021892

(87) International publication number:
WO 2019/230984 (05.12.2019 Gazette 2019/49)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 01.06.2018 JP 2018106513

(71) Applicant: NITTO DENKO CORPORATION
Ibaraki-shi
Osaka 567-8680 (JP)

(72) Inventor: UCHIYAMA Shiho
Ibaraki-shi, Osaka 567-8680 (JP)

(74) Representative: Müller-Boré & Partner
Patentanwälte PartG mbB
Friedenheimer Brücke 21
80639 München (DE)

(54) **FILTER MEDIUM AND FILTER UNIT PROVIDED WITH SAME**

(57) The filter medium of the present disclosure includes a base layer having air permeability, and the base layer has a modified surface by fibrils of polytetrafluoroethylene. The modified surface of the base layer may be exposed. A modification amount of the fibrils in the modified surface is, for example, less than 0.5 g/m$^2$. The base layer may include a fiber material, and an example of the base layer including a fiber material is a non-woven fabric. In the filter medium of the present disclosure, permeation of water into the inside of the medium can be inhibited.

FIG.1

EP 3 812 026 A1

**Description**

TECHNICAL FIELD

The present invention relates to a filter medium and a filter unit including the same.

BACKGROUND ART

As a filter medium for removing dust and the like contained in the air, a non-woven fabric of synthetic fibers such as a polyolefin resin and a polyester resin is widely used. During use of the filter medium, water due to rain, etc., may adhere to the filter medium. In consideration of this, conventionally, a water repellent treatment using a water repellent material has been performed to impart water repellency to the surface of the filter medium (see Patent Literature 1).

CITATION LIST

Patent Literature

Patent Literature 1: JP 2004-352976 A

SUMMARY OF INVENTION

Technical Problem

If the adhering water permeates the inside of the filter medium, the performance of the filter medium is impaired. Thus, it is desired to inhibit the permeation of water into the inside of the filter medium. However, according to a study by the present inventors, it is difficult to inhibit permeation of water into the inside of a filter medium by imparting water repellency to the surface of the filter medium through a water repellent treatment.
The present invention aims to provide a novel filter medium that can inhibit permeation of water into the inside of the filter medium.

Solution to Problem

The present invention provides a filter medium including a base layer having air permeability, wherein the base layer has a modified surface by fibrils of polytetrafluoroethylene (hereinafter, referred to as "PTFE").
According to another aspect, the present invention provides a filter unit including the filter medium of the present invention.

Advantageous Effects of Invention

In the filter medium according to the present invention, permeation of water into the inside of the medium can be inhibited by the modification of the surface of the base layer by the fibrils of PTFE (hereinafter, referred to as "PTFE fibrils").

BRIEF DESCRIPTION OF THE DRAWINGS

FIG. 1 is a cross-sectional view schematically showing an example of the filter medium of the present invention.
FIG. 2 is a plan view schematically showing an example of the modified surface of the base layer in the filter medium of the present invention.
FIG. 3 is a perspective view schematically showing an example of the filter unit of the present invention.
FIG. 4 is a perspective view schematically showing an example of a filter pleat pack included in the filter unit of the present invention.
FIG. 5A is a diagram showing an observation image by a scanning electron microscope (hereinafter, referred to as "SEM") of a modified surface of a base layer in a filter medium produced in Example 1.
FIG. 5B is a diagram showing regions A, B, and C in the modified surface shown in FIG. 5A.
FIG. 6 is a diagram showing an observation image by an SEM of a main surface of a filter medium produced in Comparative Example 1.

FIG. 7 is a diagram showing an observation image by an SEM of a main surface of a filter medium produced in Comparative Example 2.

DESCRIPTION OF EMBODIMENTS

Hereinafter, embodiments of the present invention will be described with reference to the drawings. The present invention is not limited to the embodiments described below.

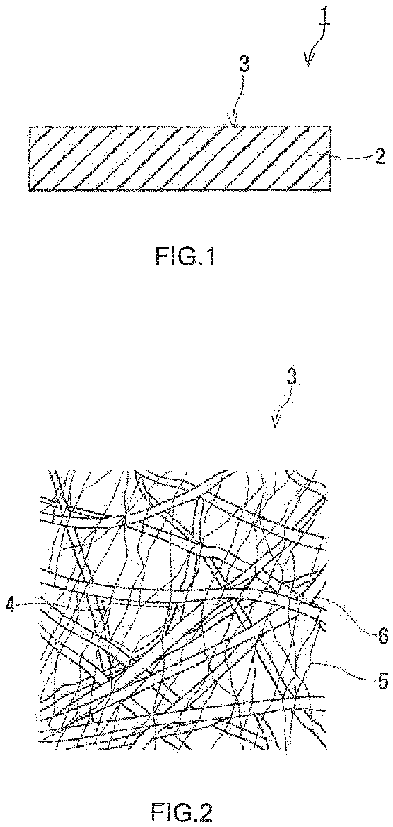

FIG. 1 shows an example of the filter medium of the present disclosure. A filter medium 1 shown in FIG. 1 includes a base layer 2 having air permeability. The base layer 2 has a modified surface 3 by a large number of PTFE fibrils. In the filter medium 1, the modified surface 3 of the base layer 2 is exposed.

The fibrils that modify the modified surface 3 are formed of PTFE which is a material having water repellency. In addition, a surface effect (an effect based on a large specific surface area) occurs on the modified surface 3 on the basis of the modification by the large number of PTFE fibrils. Therefore, permeation of water into the inside of the filter medium 1 through the modified surface 3 is inhibited. The effect of inhibiting permeation of water in the filter medium 1 is greater than that of a filter medium that has the same configuration as the base layer 2 except for having no modified surface 3 and in which water repellency is imparted to the surface thereof by a water repellent treatment.

In the filter medium 1, when the modified surface 3 is viewed in a direction perpendicular to the modified surface 3, a plurality of PTFE fibrils 5 may extend so as to traverse an air-permeable region 4 of the base layer 2 in the modified surface 3 (see FIG. 2). In this case, the area of a path, in the modified surface 3, through which water can permeate can be reduced by dividing the air-permeable region 4 by the plurality of PTFE fibrils 5. Therefore, the effect of inhibiting permeation of water into the inside of the filter medium 1 can be enhanced. In the example shown in FIG. 2, the base layer 2 includes fibers 6. The air-permeable region 4 is a void between the adjacent fibers 6. In the case where the base layer 2 includes the fibers 6, the fibers 6 are modified by fibers (PTFE fibrils 5).

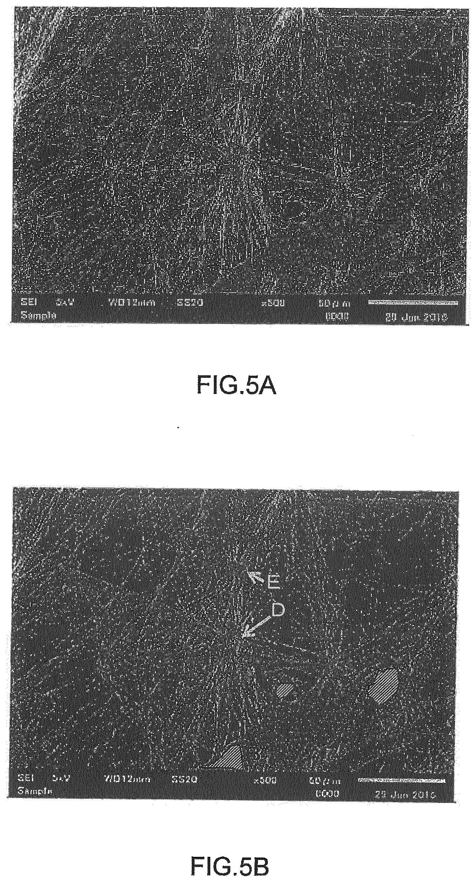

In the modified surface 3 shown in FIG. 2, there are voids between the PTFE fibrils 5, and the base layer 2 (the fibers 6 thereof) is exposed in the voids. The PTFE is a material having low joining property. However, in the filter medium 1 in which the base layer 2 is exposed in the voids, the joining property of a further layer and/or member to the modified surface 3 can be improved. In addition, in the filter medium 1, when the modified surface 3 is viewed at a magnification of 500 times in the direction perpendicular to the modified surface 3, there may be a void between the PTFE fibrils 5 in which the material included in the base layer 2 (for example, the fiber 6 shown in FIG. 2) is exposed, and the region of the material exposed in the void (the exposed region of the material in the void) may have a shape including a virtual circle with a diameter of 5 $\mu$m on the modified surface. The diameter of the virtual circle may be 7 $\mu$m or may be 10 $\mu$m. For example, FIG. 5A shows an observation image (magnification of 500 times) by an SEM of the modified surface 3 of a filter medium produced in Example 1, and, as shown in FIG. 5B, in the modified surface 3, there are regions A, B, and C each having a shape including a virtual circle with a diameter of 5 $\mu$m on the modified surface 3. In addition, the regions A and B each have a shape including a virtual circle with a diameter of 10 $\mu$m on the modified surface 3.

The modification amount of the PTFE fibrils in the modified surface 3 is, for example, less than 0.5 g/m$^2$, and may be 0.4 g/m$^2$ or less, 0.3 g/m$^2$ or less, or even 0.2 g/m$^2$ or less. The lower limit of the modification amount is, for example, 0.1 g/m$^2$ or more.

The PTFE included in the PTFE fibrils may be a modified PTFE having a structural unit other than the structural unit (TFE unit) derived from a tetrafluoroethylene monomer. The content of the TFE unit in the modified PTFE is preferably 50 mol% or more, more preferably 80 mol% or more, further preferably 90 mol% or more, and particularly preferably 95 mol% or more.

The base layer 2 has air permeability in the thickness direction thereof. The base layer 2 includes, for example, a fiber material. The fiber material that can be included in the base layer 2 may be any of a long fiber, a short fiber, and mixed fibers thereof. The base layer 2 is, for example, a non-woven fabric, a woven fabric, or a mesh. The base layer 2 is preferably a non-woven fabric since the non-woven fabric has excellent air permeability, strength, and flexibility. Examples of the type of a non-woven fabric include an airlaid non-woven fabric, a melt-blown non-woven fabric, a spunbond non-woven fabric, and a thermal bond non-woven fabric. The base layer 2 may be a layer obtained by joining two or more different types of non-woven fabrics (for example, an air-permeable support member described in JP 2014-30825 A). However, the base layer 2 is not limited to these examples.

Examples of the material included in the base layer 2 include: polyolefin resins such as polyethylene (PE) and polypropylene (PP); polyester resins such as polyethylene terephthalate (PET); polyamide resins including aromatic polyamides; and composite materials thereof. Since the joining property with the PTFE fibrils is excellent and the surface of the base layer 2 can be relatively easily modified by the PTFE fibrils, the material is preferably a polyolefin resin, and more preferably PE.

An example of a composite material included in the base layer 2 is a composite fiber having a core-sheath structure that has a core and a sheath covering the core. The materials included in the core and the sheath of the composite fiber are different from each other. The melting point of the material included in the sheath is preferably lower than the melting point of the material included in the core. Examples of the material included in the core include polyester resins such as PET. Examples of the material included in the sheath include polyolefin resins such as PE. In the case where the material included in the sheath is a polyolefin resin, the polyolefin resin having excellent joining property with the PTFE fibrils can be exposed on the surface of the base layer 2 that is the modified surface 3.

A more specific example of the base layer 2 is a non-woven fabric which includes a composite fiber having a core-sheath structure with a core including a polyester resin and a sheath including a polyolefin resin and covering the core.

The average fiber diameter of the fibers that can be included in the base layer 2 is, for example, 1 to 50 $\mu$m, and may be 1 to 30 $\mu$m or 10 to 30 $\mu$m.

The thickness of the base layer 2 is, for example, 50 to 1000 $\mu$m, and may be 100 to 500 $\mu$m or 200 to 400 $\mu$m.

The upper limit of the weight per unit area of the base layer 2 is, for example, 1000 g/m$^2$ or less, and may be 500 g/m$^2$ or less, 200 g/m$^2$ or less, or even 100 g/m$^2$ or less. The lower limit of the weight per unit area of the base layer 2 is, for example, 10 g/m$^2$ or more, and may be 50 g/m$^2$ or more.

The base layer 2 may be subjected to a water repellent treatment and/or an oil repellent treatment. The water repellent treatment and the oil repellent treatment on the base layer can be performed by a known method, for example, by applying and drying a treatment liquid containing a water-repellent material and/or an oil-repellent material. As the water-repellent material and the oil-repellent material, for example, various compounds containing a fluorine atom are known.

The upper limit of the contact angle of water on the modified surface 3 of the filter medium 1 may be, for example, 150° or less, 130° or less, or even 120° or less. The lower limit of the contact angle may be 50° or more, 70° or more, 90° or more, or even 100° or more. In the present description, the contact angle of water on the modified surface 3 is defined as a value evaluated by the sessile drop method specified in JIS R3257. It should be noted that JIS R3257 is a standard for methods for evaluating the contact angle of a substrate glass surface. However, the contact angle of water on the modified surface 3 can be evaluated under the test conditions specified in this standard.

The water content of the filter medium 1 after immersion in water for 2 hours is, for example, 150% or less. The water content of the filter medium 1 may be 100% or less or even 70% or less. The lower limit of the water content of the filter medium 1 is, for example, 10% or more. The lower the water content is, the more permeation of water into the inside of the filter medium 1 can be inhibited.

The filter medium 1 can be a medium in which the modified surface 3 is washable with water. In the present description, the term "washable with water" means that a decrease in the collection efficiency CE of the filter medium 1 is not substantially observed when the filter medium 1 is made into a circular shape with a diameter of 47 mm, 0.2 g of "11 Types Kanto Loam", which is the test powder described in JIS Z8901, is put on the modified surface 3, the powder is sucked from the opposite side at a linear velocity of 20 cm/sec, and then the modified surface 3 is washed with about 10 mL of water. A decrease in the collection efficiency CE being not substantially observed means that a decrease in the collection efficiency CE is, for example, less than 30%, preferably 25% or less, and more preferably 20% or less.

The collection efficiency of the filter medium 1 can be increased by the modification of the surface of the base layer 2 by the PTFE fibrils. The filter medium 1 has a collection efficiency CE of, for example, 65% or more when the linear velocity of a gas to be filtered is set to 5.3 cm/sec and the particle diameters of particles to be collected are set to be within the range of 0.3 to 0.5 $\mu$m. The collection efficiency CE may be 70% or more, 75% or more, 80% or more, 85% or more, or even 90% or more. The collection efficiency CE can be increased particularly in the case where, when the modified surface 3 is viewed in the direction perpendicular to the modified surface 3, a plurality of the PTFE fibrils 5 extend so as to traverse the air-permeable region 4 of the base layer 2 in the modified surface 3.

The collection efficiency CE can be evaluated as follows. A measurement holder including two plates having the same shape is prepared. Each plate has a through hole (having a circular cross-sectional shape and an effective ventilation area of 100 cm$^2$) formed therein. Next, a filter medium to be evaluated is sandwiched between both plates. The filter medium is sandwiched such that: the through holes of both plates coincide with each other when viewed in a direction perpendicular to the main surfaces of the plates; and the filter medium covers the opening of the through hole of each plate. In addition, the filter medium is sandwiched such that no gap is formed between each plate and the filter medium. In order to prevent a gap from being formed, an O-ring or a fixing member such as a double-faced adhesive tape may be used. In the case of using a fixing member, the fixing member is used such that the flow of air passing through the through holes is not obstructed by the fixing member. Next, the holder is set to a chamber to which a flow meter and a pressure gauge (manometer) are connected, such that air passes through only the through holes and the filter medium located in the through holes. Next, a pressure difference is generated between one surface and the other surface of the holder, and air is made to start flowing through the through holes and the filter medium. Next, the pressure difference is adjusted such that the linear velocity of the air passing through the through holes and the medium is maintained at 5.3 cm/sec as a value measured by the flow meter. Next, polyalphaolefin particles having a particle diameter of 0.30 to 0.50 $\mu$m (average particle diameter: 0.40 $\mu$m) are included at a concentration of $4 \times 10^8$ particles/L or more in the air to be caused to pass through the medium. Then, the concentration of the polyalphaolefin particles included in the air having passed through the medium is measured using a particle counter disposed downstream of the measurement holder, and the collection efficiency CE of the object to be evaluated is obtained by the following equation (1).

$$\text{Equation (1): Collection efficiency } CE = [1-(\text{downstream particle concentration})/(\text{upstream particle concentration})]\times100(\%)$$

With the modification of the surface of the base layer 2 by the PTFE fibrils, the collection efficiency CE can be increased while an increase in the pressure loss of the filter medium 1 is inhibited.

The filter medium 1 has a pressure loss PL of, for example, less than 40 Pa when air is passed therethrough at a linear velocity of 5.3 cm/sec. The pressure loss PL may be 35 Pa or less, 30 Pa or less, 25 Pa or less, or even 20 Pa or less.

The pressure loss PL can be evaluated as follows. A measurement holder including two plates having the same shape is prepared. Each plate has a through hole (having a circular cross-sectional shape and an effective ventilation area of 100 cm$^2$) formed therein. Next, a filter medium to be evaluated is sandwiched between both plates. The filter medium is sandwiched such that: the through holes of both plates coincide with each other when viewed in a direction perpendicular to the main surfaces of the plates; and the filter medium covers the opening of the through hole of each plate. In addition, the filter medium is sandwiched such that no gap is formed between each plate and the filter medium. In order to prevent a gap from being formed, an O-ring or a fixing member such as a double-faced adhesive tape may be used. In the case of using a fixing member, the fixing member is used such that the flow of air passing through the through holes is not obstructed by the fixing member. Next, the holder is set to a chamber to which a flow meter and a pressure gauge (manometer) are connected, such that air passes through only the through holes and the filter medium located in the through holes. Next, a pressure difference is generated between one surface and the other surface of the holder, and air is made to start flowing through the through holes and the filter medium. The pressure difference (static pressure difference) when the linear velocity of the air passing through the through holes and the filter medium reaches 5.3 cm/sec as a value measured by the flow meter is measured by the pressure gauge. The pressure difference is measured eight times for one medium, and the average value of the pressure differences is regarded as the pressure loss PL of the filter medium to be evaluated.

The PF (Performance Factor) value of the filter medium 1 which indicates the balance between collection efficiency and pressure loss is, for example, 30 or more, and may be 32 or more, 33 or more, or even 34 or more. The PF value of the filter medium 1 is obtained by the following equation (2) from the pressure loss PL and the collection efficiency CE of the filter medium 1.

$$\text{Equation (2): PF value} = \{-\log[(100-CE)/100]/(PL/9.8)\}\times100$$

Each characteristic of the filter medium 1 can be controlled, for example, by the configuration of the base layer 2 and/or the state of modification of the modified surface 3 by the PTFE fibrils. The state of modification of the modified surface 3 can be controlled, for example, by the configuration of a "PTFE modification body" described later.

The filter medium 1 may include two or more base layers having air permeability. It should be noted that, in this case, at least one of the two or more base layers is the base layer 2 having the modified surface 3. All of the two or more base layers included in the filter medium 1 may each have the modified surface 3. For example, the filter medium 1 may include two base layers and have the modified surface 3 between the two base layers. In the filter medium 1 having the modified surface 3 between two base layers, one base layer may be directly joined to the other base layer in voids between PTFE fibrils in the modified surface 3. Moreover, in the filter medium 1 having the modified surface 3 between two base layers, one base layer located at the upstream side of airflow when the filter medium 1 is used can also be used as a pre-filter for collecting particles that are contained in the airflow and that have a relatively large size.

The base layer having no modified surface 3 can have the configuration described above for the base layer 2, except for having no modified surface 3.

The weight per unit area of the filter medium 1 is, for example, 10 to 1000 g/m$^2$, and may be 30 to 500 g/m$^2$ or 50 to 100 g/m$^2$. The weight per unit area of the filter medium 1 can be obtained by dividing the weight of the filter medium 1 by the area of the main surface thereof.

The thickness of the filter medium 1 is, for example, 50 to 1000 $\mu$m, and may be 100 to 500 $\mu$m or 200 to 400 $\mu$m.

The filter medium 1 may include any layer and/or member as long as the filter medium 1 includes the base layer 2 having the modified surface 3.

The filter medium 1 can be formed, for example, by heat-laminating an original base layer, which is a body to be modified, and a modification body formed of PTFE (hereinafter, referred to as "PTFE modification body"). It should be noted that the method for forming the filter medium 1 is not limited to the method of heat-laminating the original base layer and the PTFE modification body.

In the case of forming the filter medium 1 by heat lamination, the surface, of the original base layer, that is joined to the PTFE modification body becomes the modified surface 3. Unlike a general laminated body, the modified surface 3 of the base layer 2 formed by joining the PTFE modification body may be an exposed surface. The original base layer can have the configuration described above for the base layer 2, except for having no modified surface 3.

The PTFE modification body is typically formed of countless PTFE fibrils, which are fine fibrous structures. The PTFE modification body may have PTFE nodes connected to a plurality of fibrils. In this case, there may be nodes in the modified surface 3 of the formed filter medium 1. Each node is typically observed as a PTFE aggregate having an area of 2 $\mu m^2$ or more in a magnified image of the modified surface 3. The area may be 3 $\mu m^2$ or more, 5 $\mu m^2$ or more, 7 $\mu m^2$ or more, or even 10 $\mu m^2$ or more. The upper limit of the area is, for example, 450 $\mu m^2$ or less. The ratio of the length in the long axis direction to the length in the short axis direction of the node is, for example, 10 or less, and may be 7 or less, 5 or less, 3 or less, or even 2 or less. The magnified image can be obtained, for example, by a magnification observation method with an SEM, an optical microscope, or the like.

The PTFE modification body can be formed, for example, by molding a mixture of unsintered PTFE powder (fine powder) and a liquid lubricant into a film by a method such as extrusion and/or rolling, removing the liquid lubricant from the obtained unsintered film, and then stretching the unsintered film. Examples of the liquid lubricant include hydrocarbon oils such as naphtha, white oil, dodecane, and liquid paraffin. However, the liquid lubricant is not limited as long as the liquid lubricant can wet the surface of the PTFE powder and can be subsequently removed by a method such as drying. An example of the stretching is biaxial stretching that is a combination of longitudinal stretching in the MD direction (longitudinal direction) of a film at a stretch ratio of 5 to 100 times and a stretching temperature of 100 to 380°C and transverse stretching in the TD direction (width direction) of the film at a stretch ratio of 10 to 300 times and a stretching temperature of 100 to 380°C. The lower limit of the stretch ratio of the longitudinal stretching may be more than 5 times, and may be 20 times or more. The lower limit of the stretch ratio of the transverse stretching may be more than 10 times, and may be 30 times or more. For the longitudinal stretching and the transverse stretching, either stretching may be performed first. In addition, the stretching conditions (stretch ratio and stretching temperature) may be opposite to those described above between the longitudinal stretching and the transverse stretching. The total stretch ratio that is the product of the stretch ratio of the longitudinal stretching and the stretch ratio of the transverse stretching is, for example, 10000 times or more, and may be 12000 times or more, 13000 times or more, 14000 times or more, or even 15000 times or more. At any timing after the formation of the unsintered film, sintering of heating the film to a temperature equal to or higher than the melting point of PTFE may be performed. However, in the case of performing stretching at a stretching temperature equal to or higher than the melting point of PTFE, it is preferable to omit sintering in order to prevent PTFE fibrils formed by stretching from being fused to each other.

The thickness of the PTFE modification body is, for example, less than 3.0 $\mu m$, and may be 2.5 $\mu m$ or less, 2.0 $\mu m$ or less, or even 1.8 $\mu m$ or less. The lower limit of the thickness of the PTFE modification body is, for example, 0.1 $\mu m$ or more.

The weight per unit area of the PTFE modification body is, for example, less than 0.5 $g/m^2$, and may be 0.4 $g/m^2$ or less, 0.3 $g/m^2$ or less, or even 0.2 $g/m^2$ or less. The lower limit of the weight per unit area of the PTFE modification body is, for example, 0.1 $g/m^2$ or more. The modification amount of the PTFE fibrils in the modified surface 3 can be controlled by the weight per unit area of the PTFE modification body.

The filter medium 1 can be used, for example, for allowing a gas such as air to pass therethrough and removing foreign matter such as dust contained in the gas. The filter medium 1 is typically an air filter medium that allows air to pass therethrough.

The filter medium 1 in which the modified surface 3 of the base layer 2 is exposed may be used such that the modified surface 3 is located at the most upstream side of airflow.

The filter medium 1 can be used, for example, for various products such as air purifiers, air conditioners, and cleaners. The air conditioners and the air purifiers include not only small products mainly intended for indoor use, but also large products such as air conditioning systems for buildings and products provided in transportation equipment such as automobiles and railroad vehicles. However, the application of the filter medium 1 is not limited to these examples.

The filter medium 1 may be used as a filter unit described below.

[Filter Unit]

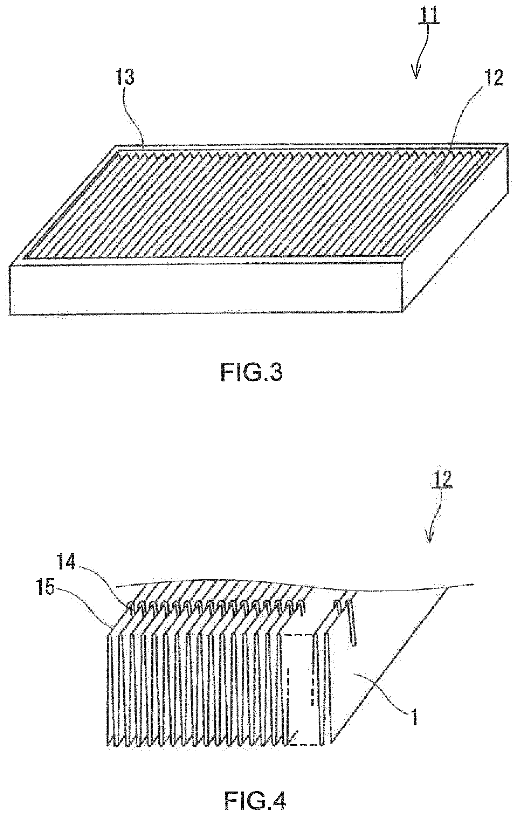

FIG. 3 shows an example of the filter unit of the present disclosure. A filter unit 11 shown in FIG. 3 includes a filter pleat pack 12 obtained by pleating the filter medium 1, and a frame 13 that supports the pleat pack 12. The frame 13 supports the periphery of the filter pleat pack 12 over the entire circumference. However, the configuration of the filter unit of the present disclosure is not limited to the example shown in FIG. 3.

As shown in FIG. 4, the filter pleat pack 12 has a structure in which the sheet-shaped filter medium 1 is folded into a pleated shape. In addition, the filter pleat pack 12 has a bead 14. The bead 14 is a string-shaped resin, and is a kind of spacer for maintaining the pleated shape of the filter medium 1. The bead 14 is disposed on the surface of the folded filter medium 1 so as to draw a continuous line or an intermittent line extending along a direction crossing pleat lines 15 (fold lines) of the filter medium 1.

In the filter pleat pack 12, the bead 14 may be disposed on one surface of the filter medium 1 or on both surfaces of the filter medium 1. In the filter medium 1 in which the modified surface 3 of the base layer 2 is exposed, the bead 14 may be disposed on the modified surface 3. The bead 14 can be formed, for example, by applying a molten resin in a string shape to the surface of the filter medium 1. The resin included in the bead 14 is not limited, and examples thereof include polyamides, polyolefins, and ethylene-vinyl acetate copolymers.

A known method can be used for pleating the filter medium 1. The filter medium 1 can be pleated, for example, by using a reciprocating pleating machine or a rotary pleating machine.

The frame 13 is formed of, for example, a metal, a resin, or a composite material thereof. In the case where the frame 13 is formed of a resin, it is also possible to fix the filter pleat pack 12 to the frame 13 at the same time as the frame 13 is formed. The configuration of the frame 13 may be the same as the configuration of a frame included in a conventional filter unit.

The filter unit 11 may include any member other than the above-described members.

The filter unit 11 can be used, for example, for allowing a gas such as air to pass therethrough and removing foreign matter such as dust contained in the gas. The filter unit 11 is typically an air filter unit that allows air to pass therethrough.

The filter unit 11 can be used, for example, for various products such as air purifiers, air conditioners, and cleaners. The air conditioners and the air purifiers include not only small products mainly intended for indoor use, but also large products such as air conditioning systems for buildings and products provided in transportation equipment such as automobiles and railroad vehicles. However, the application of the filter unit 11 is not limited to these examples.

EXAMPLES

Hereinafter, the present invention will be described more specifically by way of Examples. The present invention is not limited to the following Examples.

Methods for evaluating filter media produced in the Examples will be described below.

[Thickness]

The thicknesses of the base layers and the filter media were evaluated by a digital dial gauge. In addition, the thickness of the PTFE modification body was evaluated as follows. First, the PTFE modification body, which is an object to be evaluated, was embedded in an epoxy resin, and then a cross-section including the PTFE modification body was exposed, polished and surfaced, and further ion-polished. Next, image analysis of a magnified observation image (magnification of about 500 times) of the cross-section obtained by using a field emission SEM (FE-SEM; JSM-7500F manufactured by JEOL Ltd., acceleration voltage: 5 kV, reflected electron image) was performed, thereby obtaining the thickness of the PTFE modification body. It should be noted that, at the time of image analysis, the thicknesses at at least 10 measurement points were evaluated while changing the location, and the average value of the thicknesses was regarded as the thickness of the PTFE modification body. The above method using the FE-SEM can also be used for evaluating the thicknesses of the base layer and the PTFE modification body included in each filter medium.

[Weight per Unit Area]

The weight per unit area of the PTFE modification body was obtained by dividing the weight of the PTFE modification body by the area of the main surface thereof.

[Pressure Loss PL and Collection Efficiency CE]

The pressure loss PL and the collection efficiency CE of each filter media were evaluated by the above-described methods.

[Contact Angle]

The contact angle of water in the modified surface (Example 1) or a main surface at an upstream side (upstream side when evaluating a collection efficiency); (Comparative Examples 1 and 2) of each filter medium was measured according to JIS R3257 (Testing method of wettability of glass substrate, sessile drop method) using a contact angle measuring device (Contact Angle System OCA 30, manufactured by Data Physics Instruments GmbH).

[Water Content]

The water content of each filter medium was evaluated as follows. First, a test piece was obtained by cutting the filter medium to be evaluated into a rectangular shape of 150 mm × 125 mm. Next, the test piece was allowed to stand in an atmosphere of 25°C and 65% RH for at least 12 hours, and then the weight of the test piece (weight W1 when dried) was measured. Next, the entire test piece was immersed in water and allowed to stand for 2 hours. Next, the test piece was taken out from the water, the water droplets adhering to the surface were wiped off, and then the weight (weight W2 when wet) was measured. The water content of the filter medium was obtained by the following equation from the measured weights W1 and W2.

$$\text{Equation: Water content} = (W2-W1)/W1 \times 100 (\%)$$

[Water Washability]

The water washability of each filter medium was evaluated as follows. First, a test piece was obtained by cutting the filter medium to be evaluated into a circular shape with a diameter of 47 mm. Next, 0.2 g of "11 Types Kanto Loam", which is the test powder described in JIS Z8901, was evenly placed on the modified surface (Example 1) or the main surface at the upstream side (Comparative Examples 1 and 2) of the test piece, and sucked from the opposite side of the test piece at a linear velocity of 20 cm/sec for 60 seconds. Next, the powder placement surface was held perpendicularly, and the powder was washed away by pouring about 10 mL of water over the entire placement surface using a washing bottle. Next, the collection efficiency CE of the filter medium was evaluated, and, when the difference between the evaluated collection efficiency CE and the collection efficiency CE before the powder was placed was less than 30%, the filter medium was determined as "washability/good (o)", and when the difference was 30% or more, the filter medium was determined as "washability/poor (x)".

[Production of Filter Media]

(Example 1)

100 parts by weight of PTFE fine powder (F-104, manufactured by Daikin Industries, Ltd.) and 19 parts by weight of dodecane, which is a liquid lubricant, were uniformly mixed, and the obtained mixture was preformed. Next, the preform was paste-extruded into a sheet shape, and the obtained molded article was rolled to obtain a band-shaped sheet having a thickness of 200 $\mu$m. Next, the liquid lubricant was removed by drying from the obtained sheet, and then the sheet was stretched in the MD direction of the sheet at a stretching temperature of 280°C and a stretch ratio of 85 times and subsequently stretched in the TD direction of the sheet at a stretching temperature of 150°C and a stretch ratio of 200 times by a tenter method to obtain a modification body A formed of PTFE fibrils. The obtained modification body A had a thickness of 1.5 $\mu$m and a weight per unit area of 0.2 g/m$^2$.

Next, an airlaid non-woven fabric/PET non-woven fabric joined body (thickness: 320 $\mu$m, weight per unit area: 100 g/m$^2$, the airlaid non-woven fabric was formed of a composite fiber having a core-sheath structure with a PET core and a PE sheath and produced by the method described in paragraphs 0071 to 0073 of JP 2014-30825 A), which is a base layer, and the modification body A were stacked, and the stack was joined by heat lamination to obtain a filter medium A including a base layer having a modified surface by the modification body A. The heat lamination was performed such that the airlaid non-woven fabric and the modification body A were in contact with each other. The obtained filter medium A had a pressure loss PL of 20 Pa and a collection efficiency CE of 80%. In addition, the modification amount by the modification body A was 0.2 g/m$^2$. FIG. 5A shows an observation image (magnification of 500 times) by an SEM of the modified surface of the filter medium A.

As shown in FIG. 5A, in the modified surface in the filter medium A, there were a large number of voids that were voids between PTFE fibrils and in which the fibers included in the base layer were exposed. In addition, among the regions of the fibers exposed in the voids, there were regions A, B, and C each having a shape including a virtual circle with a diameter of 5 μm on the modified surface (see FIG. 5B). Among them, the regions A and B were large and each had a shape including a virtual circle with a diameter of 10 μm on the modified surface. Furthermore, in the modified surface in the filter medium A, a plurality of PTFE fibrils extended so as to traverse the air-permeable region of the base layer. In addition, in the modified surface, a plurality of PTFE nodes including nodes D and E were observed. It should be noted that FIG. 5A shows a state where the fibers of the base layer exposed in the voids between the PTFE fibrils were deformed into a flat plate shape by the pressure during heat lamination.

The evaluation results of the filter medium A are shown in Table 1 below.

(Comparative Example 1)

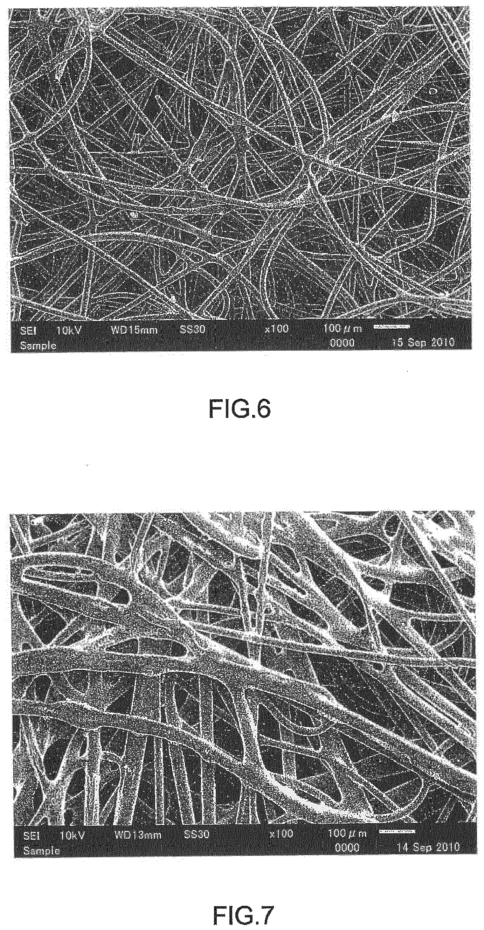

The non-woven fabric joined body prepared in Example 1 was used as a filter medium B of Comparative Example 1. The filter medium B was used such that the airlaid non-woven fabric was disposed at the upstream side. The evaluation results of the filter medium B are shown in Table 1 below, and an observation image by an SEM of the main surface at the upstream side is shown in FIG. 6.

(Comparative Example 2)

The non-woven fabric joined body prepared in Example 1 was used as a filter medium C of Comparative Example 2. The filter medium C was used such that the PET non-woven fabric was disposed at the upstream side. The evaluation results of the filter medium C are shown in Table 1 below, and an observation image by an SEM of the main surface at the upstream side is shown in FIG. 7. As shown in FIG. 7, a water repellent adhered to the surfaces of the fibers included in the PET non-woven fabric.

[Table 1]

|  | Example 1 | Comparative Example 1 | Comparative Example 2 |
|---|---|---|---|
| Contact angle (°) | 106.5 | 119.7 | 137.6 |
| Water content (%) | 70 | 159 | 159 |
| Collection efficiency (%) | 80 | 15 | 15 |
| Washability | ○ | × | × |
| Thickness (μm) | 320 | 320 | 320 |

As shown in Table 1, in the filter medium of the Example, the water content was significantly decreased as compared to those of the filter media of the Comparative Examples. In addition, a significant increase in collection efficiency was confirmed.

INDUSTRIAL APPLICABILITY

The filter medium of the present invention can be used for applications where a conventional filter medium has been used.

**Claims**

1.  A filter medium comprising a base layer having air permeability, wherein the base layer has a modified surface by fibrils of polytetrafluoroethylene.

2.  The filter medium according to claim 1, wherein the modified surface of the base layer is exposed.

3.  The filter medium according to claim 1 or 2, wherein, when the modified surface is viewed in a direction perpendicular to the modified surface, a plurality of the fibrils extend so as to traverse an air-permeable region of the base layer in the modified surface.

4.  The filter medium according to any one of claims 1 to 3, wherein
    when the modified surface is viewed at a magnification of 500 times in the direction perpendicular to the modified surface,
there is a void between the fibrils in which a material included in the base layer is exposed, and
a region of the material exposed in the void has a shape including a virtual circle with a diameter of 5 $\mu$m on the modified surface.

5. The filter medium according to any one of claims 1 to 4, wherein a modification amount of the fibrils in the modified surface is less than 0.5 g/m$^2$.

6. The filter medium according to any one of claims 1 to 5, wherein the base layer includes a fiber material.

7. The filter medium according to claim 6, wherein the base layer is a non-woven fabric.

8. The filter medium according to claim 7, wherein the non-woven fabric includes a composite fiber having a core-sheath structure with a core including a polyester resin and a sheath including a polyolefin resin and covering the core.

9. A filter unit comprising the filter medium according to any one of claims 1 to 8.

10. The filter unit according to claim 9, wherein the filter medium is pleated.

FIG.1

FIG.2

FIG.3

FIG.4

FIG.5A

FIG.5B

FIG.6

FIG.7

## INTERNATIONAL SEARCH REPORT

| | International application No. |
|---|---|
| | PCT/JP2019/021892 |

**A. CLASSIFICATION OF SUBJECT MATTER**
Int.Cl.  B01D39/16(2006.01)i, B01D46/52(2006.01)i, B01D69/02(2006.01)i,
B01D69/10(2006.01)i, B01D69/12(2006.01)i, B01D71/26(2006.01)i,
B01D71/36(2006.01)i, B01D71/48(2006.01)i
According to International Patent Classification (IPC) or to both national classification and IPC

**B. FIELDS SEARCHED**

Minimum documentation searched (classification system followed by classification symbols)
Int.Cl.  B01D39/16, B01D46/52, B01D69/02, B01D69/10, B01D69/12, B01D71/26,
B01D71/36, B01D71/48

Documentation searched other than minimum documentation to the extent that such documents are included in the fields searched
| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)


**C. DOCUMENTS CONSIDERED TO BE RELEVANT**

| Category* | Citation of document, with indication, where appropriate, of the relevant passages | Relevant to claim No. |
|---|---|---|
| X | JP 2013-173078 A (NITTO DENKO CORP.) 05 September 2013, claims 1, 6, 9, paragraphs [0031], [0055], [0068]-[0069], [0074], example 1, fig. 1-2 & US 2015/0013295 A1 claims 1, 6, 9, paragraphs [0032], [0056], [0070]-[0071], [0076], example 1, fig. 1-2 & WO 2013/125205 A1 & EP 2818223 A1 & TW 201343234 A & CN 104144734 A & KR 10-2014-0125443 A | 1-10 |

☒  Further documents are listed in the continuation of Box C.   ☐  See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 July 2019 (22.07.2019) | 06 August 2019 (06.08.2019) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2019/021892

C (Continuation). DOCUMENTS CONSIDERED TO BE RELEVANT

| Category* | Citation of document, with indication, where appropriate, of the relevant passages | Relevant to claim No. |
|---|---|---|
| X | JP 2013-32514 A (NITTO DENKO CORP.) 14 February 2013, claims 1, 8, paragraphs [0002], [0076], [0079], examples, fig. 1, 4 & US 2014/0130470 A1, claims 1, 8, paragraphs [0002], [0075], [0078], examples, fig. 1, 4 & WO 2013/005430 A1 & EP 2730607 A1 & TW 201306931 A & CN 103649189 A & KR 10-2014-0056232 A | 1-10 |
| X | JP 2000-140587 A (TONEN TAPIRUSU KK) 23 May 2000, claim 1, paragraphs [0005], [0010]-[0011], [0013]-[0014], examples & US 6309438 B1, claim 1, page 4, lines 45-60, page 5, lines 29-46, 5-33, examples | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004352976 A

- JP 2014030825 A